# FASCICULE DE BREVET EUROPEEN

(11) **EP 3 746 667 B1**
(45) Date de publication et mention de la délivrance du brevet: **02.03.2022**
(21) Numéro de dépôt: 19700941.8
(22) Date de dépôt: 21.01.2019
(51) Int. Cl.: F16C 27/02, F16C 27/06, F16C 17/24, F16F 1/38, B60G 7/02

(54) **ARTICULATION ÉLASTIQUE DONT UNE DOUILLE INTERNE COMPORTE UNE ZONE DE RUPTURE**
ELASTISCHES LAGER MIT EINER INTERNEN BUCHSE VERSEHEN MIT EINER SOLLBRUCHSTELLE
ELASTIC JOINT WITH AN INTERNAL SLEEVE HAVING A BREAKING POINT

(30) Priorité: 01.02.2018 FR 1850855
(43) Date de publication de la demande: 09.12.2020
(73) Titulaire: Renault s.a.s, 92100 Boulogne Billancourt (FR)
(72) Inventeur: ROLLET, Remi, 91190 GIF SUR YVETTE (FR); SAUDEMONT, Yoann, 28210 LES PINTHIERES (FR)
(74) Mandataire: Renault Group
(86) Numéro de dépôt international: PCT/EP2019/051356
(87) Numéro de publication internationale: WO 2019/149553

(56) Documents cités:
- EP-A2- 1 270 986
- EP-A2- 1 998 068
- FR-A1- 2 214 067
- FR-A1- 2 266 042
- FR-A1- 2 865 511
- US-A1- 2006 091 595
- US-A1- 2015 008 305

## Description

### DOMAINE TECHNIQUE DE L'INVENTION

L'invention concerne une articulation élastique, notamment pour un véhicule automobile, d'axe principal d'orientation axiale qui comporte :
- une douille externe tubulaire ;
- une douille interne agencée concentriquement à l'intérieur de la douille externe ;
- une bague en matériau élastomère qui est intercalée radialement entre la douille externe et la douille interne ;
- la douille interne étant ajourée d'au moins une cavité traversant axialement l'épaisseur de sa paroi.

### ARRIERE PLAN TECHNIQUE DE L'INVENTION

Les dispositifs de suspension de véhicules automobiles, par exemple les dispositifs de type "MacPherson" ou de type "multibras", comporte des bras de suspension qui sont montés articulés par une première extrémité aux masses non suspendues du véhicule, notamment à un porte-fusée de roue, et par une deuxième extrémité à une masse suspendue du véhicule, notamment un élément de châssis du véhicule. Entre autres fonctions, certains bras permettent notamment d'assurer le parallélisme des roues du véhicule.

Il est connu d'articuler chaque extrémité du bras de suspension sur son support respectif par l'intermédiaire d'une articulation élastique, parfois désignée sous l'appellation "silentbloc" ou "flexibloc". Une telle articulation élastique présente l'avantage de supprimer les jeux mécaniques entre le bras et son support. Le document FR 2 865 511 A1 divulgue une articulation élastique suivant le préambule de la revendication 1.

En outre, cet effet de réduction des nuisances sonores est encore amélioré par le fait que l'articulation élastique permet de filtrer certaines vibrations entre la roue et le châssis du véhicule.

Une telle articulation élastique permet un pivotement limité du bras par rapport à son support par torsion de la bague en matériau élastomère autour de l'axe principal de l'articulation.

Lorsque la roue du véhicule rencontre un obstacle particulièrement marqué, par exemple un trou ou un bord de trottoir, le choc subi par la roue est transmis au bras du dispositif de suspension puis au châssis par l'intermédiaire de l'articulation élastique.

Les articulations élastiques de l'état de la technique sont suffisamment solides pour pouvoir résister à de tels chocs. La bague en matériau élastomère ne parvient néanmoins pas toujours à amortir suffisamment le choc pour éviter qu'un autre élément du dispositif de suspension et/ou du châssis ne soit endommagé par le choc.

La dégradation d'un élément de structure du véhicule par un tel choc est susceptible de rester indétectable par le conducteur pendant un certain temps. C'est par exemple le cas lorsque le choc provoque la fissuration d'un élément de structure. Cette situation est potentiellement très dangereuse car l'usure par fatigue de l'élément fissuré risque de provoquer sa rupture subite à un moment ultérieur. Ceci est notamment dangereux lorsque la rupture de l'élément de structure entraîne une perte de contrôle du véhicule tandis qu'il roule à grande vitesse.

La présente invention propose une solution pour permettre d'avertir le conducteur du véhicule lorsque la roue subit un choc suffisamment fort pour potentiellement provoquer la dégradation d'un élément de structure du dispositif de suspension et/ou du châssis.

### BREF RESUME DE L'INVENTION

L'invention propose une articulation élastique, notamment pour un véhicule automobile, d'axe principal d'orientation axiale qui comporte :
- une douille externe tubulaire cylindrique coaxiale à l'axe principal ;
- une douille interne présentant une paroi tubulaire délimitée par une face interne cylindrique circonscrivant un orifice central et par une face externe cylindrique, la douille interne étant agencée concentriquement à l'intérieur de la douille externe ;
- une bague en matériau élastomère qui est intercalée radialement entre la douille externe et la douille interne ;
- la douille interne étant ajourée d'au moins une cavité traversant axialement l'épaisseur de sa paroi, la cavité s'étendant circonférentiellement en arc de cercle sur un secteur angulaire déterminé autour de l'axe principal, la cavité étant délimitée radialement par une cloison interne et par une cloison externe,
- la cloison interne étant délimitée radialement par une face externe, d'une part, et par la face interne de la paroi de la douille interne, d'autre part, la face externe de la cloison interne présentant une largeur supérieure ou égale au diamètre de l'orifice central ;
   caractérisé en ce que la cloison interne comporte une zone de rupture axiale de localisation prédéterminée présentant une ouverture axiale ou une résistance à la rupture sensiblement inférieure celle du reste de ladite cloison interne

Selon d'autres caractéristiques de l'invention :
- la zone de rupture est formée par une fente axiale traversant la cloison interne et qui s'étend sur toute la longueur axiale de la cloison interne ;
- la zone de rupture comporte au moins une rainure superficielle formée dans la face interne et/ou dans la face externe de la cloison interne de manière à former une amorce de rupture ;

- la zone de rupture est agencée sensiblement à la bissectrice dudit secteur angulaire sur lequel s'étend la cavité ;
- la fente ou la rainure est continue sur toute la longueur axiale de la cloison interne ;
- la fente ou la rainure s'étend de manière discontinue le long de la cloison interne ;
- la douille interne présente une symétrie axiale selon l'axe principal de l'articulation.

L'invention concerne aussi un dispositif de suspension de véhicule comportant au moins un bras de suspension d'axe sensiblement transversal et au moins une chape de support, au moins une extrémité du bras étant montée articulée autour d'un axe longitudinal sur la chape de support par l'intermédiaire d'une articulation élastique réalisée selon les enseignements de l'invention, l'articulation étant fixée à la chape au moyen d'une vis dont une tige transversale est reçue dans l'orifice central de la douille interne avec serrage longitudinal de la douille interne entre deux joues de la chape,
caractérisé en ce que la bissectrice des secteurs angulaires de chaque cavité est orientée sensiblement dans l'axe du bras.

Selon une autre caractéristique du dispositif de suspension, l'une des extrémités du bras est reliée à un porte-fusée ou un berceau du véhicule par l'intermédiaire de ladite chape.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente une articulation élastique ;
- la figure 2 est une vue de face qui représente une articulation élastique similaire à celle de la figure 1 qui est réalisée selon les enseignements de l'invention comportant deux zones de rupture réalisées selon un deuxième mode de réalisation de l'invention ;
- la figure 3 est une vue de face d'une douille interne de l'articulation élastique de la figure 2 dans laquelle les zones de rupture sont réalisées selon un premier mode de réalisation de l'invention ;
- la figure 4 est une vue similaire à celle de la figure 3 qui représente la douille interne lors de son fonctionnement en tant que fusible mécanique ;
- la figure 5 est une vue similaire à celle de la figure 3 qui représente les zones de rupture de la douille interne réalisées selon un deuxième mode de réalisation de l'invention ;
- la figure 6 est une vue en perspective qui représente un dispositif de suspension d'une roue arrière de véhicule automobile dans laquelle un bras transversal est fixé au moyen de deux articulations élastiques réalisées selon les enseignements de l'invention.

### DESCRIPTION DETAILLEE DES FIGURES

Par la suite, des éléments présentant une structure identique ou des fonctions analogues seront désignés par une même référence.

Par la suite, on adoptera à titre non limitatif un repère attaché au véhicule automobile et comportant des orientations longitudinale, dirigée d'arrière en avant, verticale, dirigée de bas en haut, et transversale, dirigée de gauche à droite, qui seront représentées par le trièdre "L,V,T" des figures. La direction verticale est utilisée à titre de repère géométrique dirigé orthogonalement à la route sur laquelle repose le véhicule automobile.

On adoptera aussi un repère local attaché à chaque articulation élastique et comportant une orientation axiale "A" parallèle à l'axe principal de l'articulation élastique, des orientations radiales dirigées orthogonalement depuis l'axe principal de l'articulation élastique vers l'extérieur, et des orientations tangentielles dirigée orthogonalement aux orientations radiale et axiale.

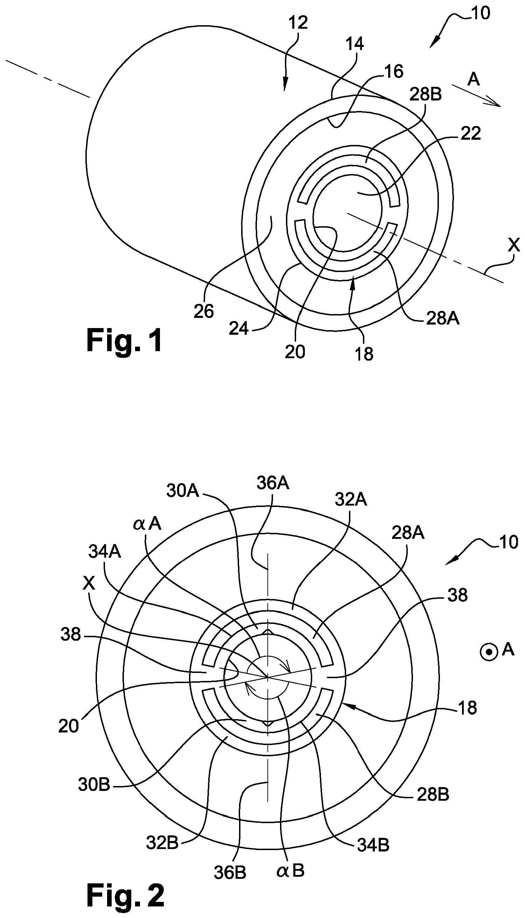

On a représenté à la figure 1 une articulation élastique 10 qui est destinée à être utilisé dans un véhicule automobile, comme cela sera expliqué plus en détails par la suite. L'articulation élastique 10 comporte un axe "X" principal d'orientation axiale.

De manière connue, une telle articulation 10 élastique comporte une douille 12 externe tubulaire cylindrique d'axe sensiblement coaxial à l'axe principal "X". La douille 12 est délimitée radialement par une face externe 14 cylindrique, ici de profil circulaire et par une face interne 16 cylindrique, ici de profil circulaire.

L'articulation 10 élastique comporte aussi une douille 18 interne présentant une paroi tubulaire cylindrique d'axe coaxial à l'axe "X" principal. La paroi est délimitée par une face 20 interne cylindrique, ici de profil circulaire, circonscrivant un orifice 22 central et par une 24 face externe cylindrique, ici de profil circulaire.

La douille 18 interne est agencée concentriquement à l'intérieur de la douille 12 externe.

Les douilles 12, 18 sont parfois désignées par le terme "armature".

Une bague 26 d'axe coaxial à l'axe "X" principal en matériau élastomère est intercalée radialement entre la face interne 16 la douille 12 externe et la face 24 externe de la douille 18 interne. La bague 26 de matériau élastomère est par exemple montée précontrainte en compression radiale entre les deux douilles 12, 18.

Les douilles 12, 18 externe et interne sont ici réalisées en un matériau métallique tel que de l'acier ou de l'aluminium. La douille 18 interne est par exemple réalisée par extrusion.

Selon les enseignements de l'invention, la douille 18 interne est ajourée d'au moins une cavité 28A, 28B formée dans l'épaisseur de sa paroi et traversant axialement la douille 18. Chaque cavité 28A, 28B débouche axialement dans les deux sens dans les faces d'extrémité axiale de paroi de la douille 18 externe. Chaque cavité 28A, 28B s'étend circonférentiellement en arc de cercle sur un secteur angulaire "aA, aB" déterminé autour de l'axe "X" principal, comme cela est illustré plus en détails à la figure 2.

Ici la douille 18 interne comporte deux cavités 28A, 28B. La douille 18 interne présente une symétrie axiale par rapport à son axe "X" principal. De ce fait, les deux cavités 28A, 28B s'étendent chacune sur des secteurs angulaires "aA, aB" de même valeur.

Chaque cavité 28A, 28B est délimitée radialement par une cloison 30A, 30B interne et par une cloison 32A, 32B externe. Chaque cloison 30A, 30B interne est ainsi délimitée radialement par une face 34 externe tournée vers l'intérieur de la cavité 28A, 28B, d'une part, et par la face 20 interne de la paroi de la douille 18 interne, d'autre part. Les cloisons 30A, 30B internes présentent ici une épaisseur radiale sensiblement constante.

Au moins l'une des cavités 28A, 28B s'étend sur un secteur angulaire "aA, aB" tel que la face 34A, 34B externe de la cloison 30A, 30B interne présente une largeur supérieure ou égale au diamètre de l'orifice 22 central. En termes mathématiques, cela signifie que la projection orthogonale de la face 34A, 34B externe de la cloison 30A, 30B interne selon une bissectrice 36A, 36B du secteur angulaire "aA, aB" sur un plan orthogonal à ladite bissectrice 36A, 36B présente une largeur radiale supérieure ou égale au diamètre de l'orifice 22 central, comme cela est représenté par les traits interrompus parallèles aux bissectrices 36A, 36B de la figure 2. Dans les exemples représentés aux figures, les deux cavités 28A, 28B s'étendent sur un tel secteur angulaire "aA, aB".

Les deux cavités 28A, 28B sont ici séparées par deux rayons 38 radiaux qui relient les cloisons 30A, 30B internes avec les cloisons 32A, 32B externes. Les deux rayons 28 sont diamétralement opposés.

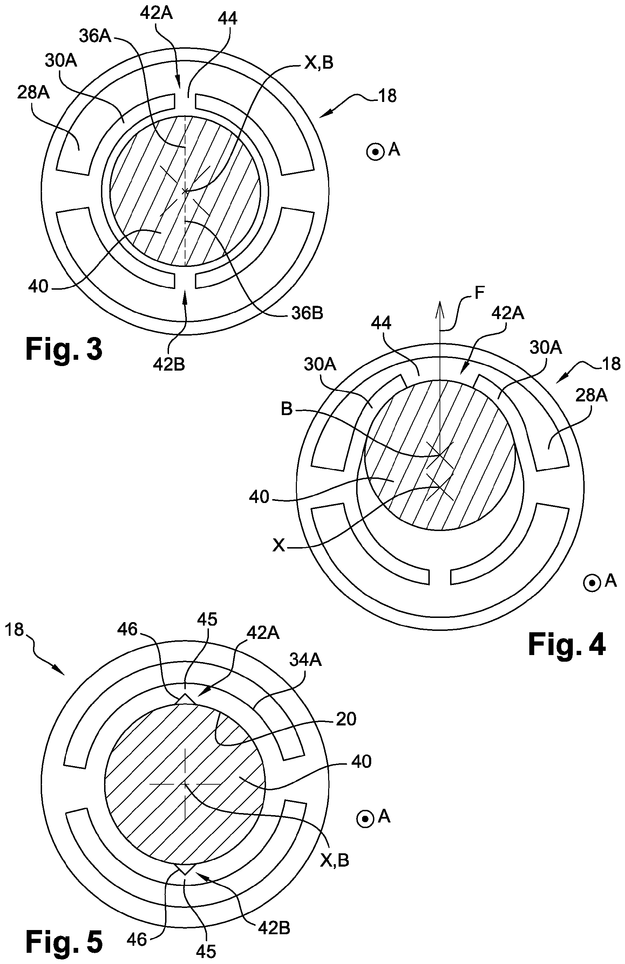

Une tige 40 de fixation de l'articulation élastique, par exemple une vis, est destinée à être reçue dans l'orifice 22 central de la douille 18 interne, comme cela est représenté à la figure 3. La tige 40 présente un axe "B" d'orientation axiale qui est sensiblement coaxial avec l'axe "X" de l'articulation 10 élastique.

Selon les enseignements de l'invention, au moins l'une des cloisons 30A, 30B internes forme un fusible mécanique qui est destiné à être déformé sous l'effet d'un effort "F" centrifuge appliqué à la tige 40 de fixation. La déformation se produit lorsque l'effort "F" centrifuge est d'intensité supérieure à un seuil déterminé selon une direction de déformation alignée avec la bissectrice 36A, 36B de ladite cloison 30A, 30B interne.

Plus particulièrement, au moins l'une des cloisons 30A, 30B internes comporte une zone 42A, 42B de rupture axiale de localisation prédéterminée présentant une ouverture axiale ou une résistance à la rupture sensiblement inférieure celle du reste de ladite cloison 30A, 30B interne.

La zone 42A, 42B de rupture est ici agencée sensiblement à la bissectrice 36A, 36B dudit secteur "aA, aB" angulaire sur lequel s'étend la cavité 28A, 28B.

Dans les exemples représentés aux figures, les deux cloisons 30A, 30B internes sont munies d'une zone 42A, 42B de rupture. Dans la suite de la description, on expliquera le fonctionnement de l'invention en décrivant uniquement la déformation de la cloison 30A interne situé en haut des dessins. Cette description sera applicable par symétrie à l'autre cloison 30B interne.

En variante non représentée de l'invention, seule l'une des cloisons internes est munie d'une zone de rupture.

Dans un premier mode de réalisation de l'invention représenté aux figures 3 et 4, la zone de rupture 42A est formée par une ouverture 44 réalisée dans la cloison 30A interne. L'ouverture 44 s'étend ici sur un secteur angulaire restreint par rapport au secteur angulaire "aA" sur lequel s'étend la cavité. L'ouverture 44 présente par exemple la forme d'une fente axiale continue traversant radialement la cloison 30A interne et qui s'étend sur toute la longueur axiale de la cloison 30A interne.

L'ouverture 44 divise ainsi circonférentiellement la cloison 30A interne en deux parties de cloisons qui s'étendent chacune circonférentiellement depuis un bord libre de l'ouverture 44 jusqu'à un rayon 38 associé.

L'ouverture 44 est ici agencée sur la bissectrice 36A de la cavité 28A.

Comme cela est représenté à la figure 4, lorsqu'un effort "F" radial centrifuge d'intensité supérieure au seuil déterminé est exercé par la tige 40 relativement à la douille 18 interne selon la direction de déformation, la tige 40 se déplace vers la cavité 28A en provoquant la déformation en flexion de chaque partie de cloison 30A de part et d'autre de l'ouverture 44. La cloison 30A interne est ainsi enfoncée radialement vers l'intérieur de la cavité 28A par élargissement de la zone 42A de rupture, c'est-à-dire par écartement circonférentiel des bords libres de l'ouverture 44. Le déplacement de la tige 40 vers la cavité est rendu possible par les dimensions de la cavité 28A, et notamment grâce à l'étendue de son secteur angulaire "aA", comme cela a été expliqué précédemment.

L'axe "B" de la tige 40 est alors excentré radialement par rapport à l'axe "X" de l'articulation 10 élastique, comme cela est représenté à la figure 4.

Selon un deuxième mode de réalisation de l'invention qui est représenté à la figure 5, les deux parties de la cloison 30A, 30B interne sont reliées circonférentiellement par un pont 45 de matière. Toutefois, ce pont de matière est d'épaisseur radiale inférieure à celle du reste de la cloison 30A, 30B de manière former une amorce de rupture. Le pont de matière s'étend ici sur un secteur angulaire restreint par rapport au secteur angulaire "aA" sur lequel s'étend la cavité.

La zone 42A, 42B de rupture comporte ainsi au moins une rainure 46 superficielle qui est formée dans la face 20 interne et/ou dans la face 34A, 34B externe de la cloison 30A, 30B interne de manière à former une amorce de rupture. La rainure 46 s'étend axialement. Elle est ici agencée sur la bissectrice 36A, 36B du secteur " aA, aB" angulaire de la cavité 28A, 28B associée.

Dans l'exemple représenté à la figure 4, la rainure 46 est agencée dans la face 20 interne de la paroi 30A, 30B interne. La rainure 46 est ici continue sur toute la longueur axiale de la cloison 30A, 30B interne.

En variante non représentée de l'invention, la rainure s'étend de manière discontinue le long d'une ligne axiale.

En référence à la figure 4, lorsqu'un effort "F" radial centrifuge d'intensité supérieure au seuil déterminé est exercé par la tige 40 relativement à la douille 18 interne selon la direction de déformation, la tige 40 se déplace vers la cavité 28A en provoquant un effort de traction circonférentiel dans la cloison 30A interne. Au niveau de la rainure 46, la cloison 30A interne présente une résistance à la rupture inférieure à celle du reste de la cloison 30A interne. Lorsque l'effort "F" excède le seuil déterminé, il provoque la rupture du pont de matière 45 de la cloison 30A interne au niveau de la rainure 46.

Il s'ensuit, comme cela est représenté à la figure 4, la déformation en flexion de chaque partie de cloison 30A de part et d'autre de la zone 42A de rupture, désormais rompue. La cloison 30A interne est ainsi enfoncée radialement vers l'intérieur de la cavité 28A par élargissement de la zone 42A de rupture, c'est-à-dire par écartement circonférentiel des bords libre de part et d'autre de la zone 42A de rupture.

L'articulation 10 élastique réalisée selon l'un quelconque des modes de réalisation de l'invention trouve avantageusement à s'appliquer à un dispositif de suspension de véhicule automobile.

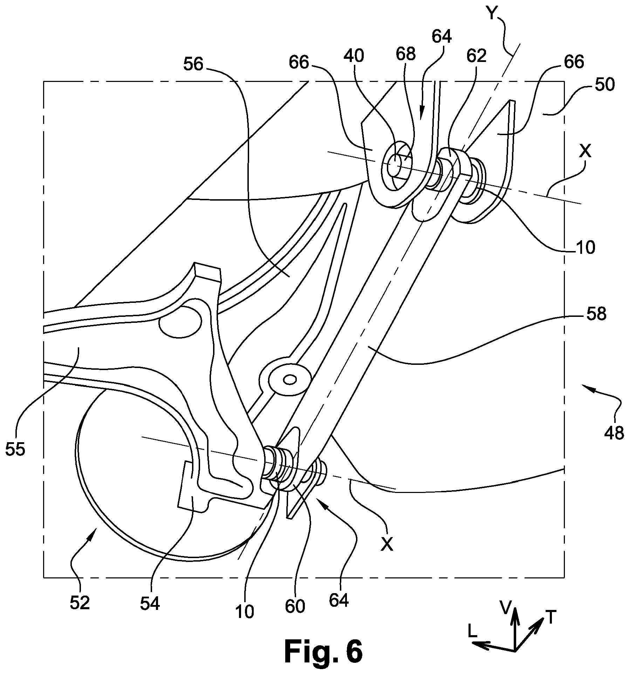

On a représenté à la figure 6, un dispositif 48 de suspension de véhicule automobile. Il s'agit ici d'un dispositif 48 de suspension multibras qui est agencé dans un train arrière de véhicule automobile.

De manière connue, un tel dispositif 48 de suspension permet de se lier à une masse suspendue du véhicule automobile, comportant notamment un berceau 50 fixé au châssis du véhicule, par rapport à une masse non suspendue du véhicule automobile, notamment un ensemble 52 de roue comportant un porte-fusée 54.

Un tel dispositif 48 de suspension comporte plusieurs bras dont chacun permet de guider les mouvements du porte-fusée 54 par rapport au berceau 50. Il comporte par exemple un bras longitudinal 55, un bras transversal supérieur 56 et un bras transversal inférieur 58.

On s'intéressera plus particulièrement au bras transversal inférieur 58 qui permet, entre autres fonctions, de maintenir le parallélisme de la roue destinée à être portée par le porte-fusée 54. Le bras transversal inférieur 58 présente un axe principal "Y" globalement transversal. Il comporte aussi une première extrémité libre 60 qui est montée articulée sur le porte-fusée 54 et une deuxième extrémité libre 62 opposée qui est montée articulée sur le berceau 50.

Chaque extrémité libre 60, 62 du bras transversal inférieur 58 est montée articulée autour d'un axe longitudinal "X" par l'intermédiaire d'une articulation 10 élastique réalisée selon l'un quelconque des modes de réalisation de l'invention. Chaque extrémité libre 60, 62 du bras transversal inférieur 58 est plus particulièrement reçue dans une chape 64 associée de fixation qui est respectivement fixée au porte-fusée 54 ou au berceau 50.

Chaque chape 64 comporte deux joues 66 transversales verticales qui s'étendent parallèlement et entre lesquelles est reçue l'extrémité 60, 62 libre associée du bras transversale inférieur 58. Au préalable, l'articulation 10 élastique est logée dans un orifice correspondant de chacune des extrémités 60, 62 du bras transversal inférieur 58 de manière que la douille 12 externe soit reçue avec un ajustement serré dans ledit orifice correspondant.

Une tige 40 longitudinale de fixation, par exemple une vis, est ensuite enfilée dans l'orifice 22 central de l'articulation élastique 10 en passant par des trous de passage en coïncidence des joues 66. Les extrémités de la tige 40, qui font saillies à l'extérieur de la chape 66, sont filetées de manière à recevoir des écrous 68 de serrage qui vont emprisonner la tige 40 et l'articulation 10 élastique dans la chape 64. L'articulation 10 élastique présente avantageusement une dimension axiale suffisamment longue pour pouvoir être comprimée entre les deux joues 66 de la chape 64 lors du serrage des écrous 68.

Lors du montage des articulations 10 élastiques sur le bras transversal inférieur 68, les zones 42A, 42B de rupture sont agencées sensiblement dans l'axe "Y du bras transversal inférieur 58. Ainsi, la direction de déformation est orientée sensiblement dans l'axe "Y" du bras 58.

Ainsi, lorsque la roue du véhicule automobile subit un choc longitudinal ou transversal particulièrement violent, ce dernier est transmis à l'articulation 10 élastique sous la forme d'un effort "F" de forte intensité dirigé dans la direction de déformation, comme cela est représenté à la figure 4. Il s'ensuit qu'au moins l'une des extrémités libres 60, 62 du bras 58 est déplacée transversalement par rapport à la chape 64 sur laquelle elle est fixée par enfoncement de la tige 40 dans la cloison 30A interne de la douille 18 interne correspondante. De ce fait, l'articulation 10 élastique glisse entre les joues 66 de la chape 64. Elle se retrouve coincée, du fait du frottement produit par le serrage entre les joues 66, dans une position excentrée par rapport à sa position initiale. Ceci induit un dérèglement permanent du parallélisme de la roue correspondante.

A la suite de ce choc particulièrement violent, le conducteur est alors obligé de rectifier la trajectoire de son véhicule pour le maintenir sur la route. Le conducteur est ainsi conscient que des éléments ont été endommagés par le choc.

L'invention permet ainsi au conducteur de prendre conscience de la nécessité de vérifier rapidement l'état de son véhicule lorsqu'il subit un choc d'intensité supérieure à un seuil déterminé.

## Revendications

1. Articulation (10) élastique, notamment pour un véhicule automobile, d'axe (X) principal d'orientation axiale qui comporte :
- une douille (12) externe tubulaire cylindrique coaxiale à l'axe (X) principal ;
- une douille (18) interne présentant une paroi tubulaire délimitée par une face (20) interne cylindrique circonscrivant un orifice (22) central et par une face (24) externe cylindrique, la douille (18) interne étant agencée concentriquement à l'intérieur de la douille (12) externe ;
- une bague (26) en matériau élastomère qui est intercalée radialement entre la douille (12) externe et la douille (18) interne ;
- la douille (18) interne étant ajourée d'au moins une cavité (28A, 28B) traversant axialement l'épaisseur de sa paroi, la cavité (28A, 28B) s'étendant circonférentiellement en arc de cercle sur un secteur (αA, αB) angulaire déterminé autour de l'axe (X) principal, la cavité (28A, 28B) étant délimitée radialement par une cloison (30A, 30B) interne et par une cloison (32A, 32B) externe,
- la cloison (30A, 30B) interne étant délimitée radialement par une face (34A, 34B) externe, d'une part, et par la face (20) interne de la paroi de la douille (18) interne, d'autre part, la face (34A, 34B) externe de la cloison (30A, 30B) interne présentant une largeur supérieure ou égale au diamètre de l'orifice (22) central ;
**caractérisé en ce que** la cloison (30A, 30B) interne comporte une zone (42A, 42B) de rupture axiale de localisation prédéterminée présentant une ouverture (44) axiale ou une résistance à la rupture sensiblement inférieure celle du reste de ladite cloison (30A, 30B) interne .

2. Articulation (10) élastique selon la revendication précédente, **caractérisée en ce que** la zone (42A, 42B) de rupture est formée par une fente (44) axiale traversant la cloison (30A, 30B) interne et qui s'étend sur toute la longueur axiale de la cloison (30A, 30B) interne.

3. Articulation (10) selon la revendication 1, **caractérisé en ce que** la zone (42A, 42B) de rupture comporte au moins une rainure (46) superficielle formée dans la face (20) interne et/ou dans la face (34A, 34B) externe de la cloison (30A, 30B) interne de manière à former une amorce de rupture.

4. Articulation (10) selon l'une quelconque des revendications précédentes, **caractérisé en ce que** la zone (42A, 42B) de rupture est agencée sensiblement à la bissectrice (36A, 36B) dudit secteur (αA, αB) angulaire sur lequel s'étend la cavité (28A, 28B).

5. Articulation (10) selon l'une quelconque des revendications 2 à 4, **caractérisée en ce que** la fente (44) ou la rainure (46) est continue sur toute la longueur axiale de la cloison (30A, 30B) interne.

6. Articulation (10) selon l'une quelconque des revendications 2 à 4, **caractérisée en ce que** la fente (44) ou la rainure (46) s'étend de manière discontinue le long de la cloison (30A, 30B) interne.

7. Articulation (10) élastique selon l'une quelconque des revendications précédentes, **caractérisé en ce que** la douille (18) interne présente une symétrie axiale selon l'axe (X) principal de l'articulation (10).

8. Dispositif (48) de suspension de véhicule comportant au moins un bras (58) de suspension d'axe (Y) sensiblement transversal et au moins une chape (64) de support, au moins une extrémité (60, 62) du bras (58) étant montée articulée autour d'un axe (X) longitudinal sur la chape (64) de support par l'intermédiaire d'une articulation (10) élastique réalisée selon l'une quelconque des revendications précédentes, l'articulation (10) étant fixée à la chape (64) au moyen d'une vis dont une tige (40) transversale est reçue dans l'orifice (22) central de la douille (18) interne avec serrage longitudinal de la douille (18) interne entre deux joues (66) de la chape (64),
**caractérisé en ce que** la bissectrice (36A, 36B) des secteurs (αA, αB) angulaires de chaque cavité (28A, 28B) est orientée sensiblement dans l'axe (Y) du bras.

9. Dispositif (48) selon la revendication précédente, **caractérisé en ce que** l'une des extrémités (60, 62) du bras (58) est reliée à un porte-fusée (54) ou un berceau (50) du véhicule par l'intermédiaire de ladite chape (64).

## Patentansprüche

1. Elastisches Gelenk (10), insbesondere für ein Kraftfahrzeug, mit einer axial ausgerichteten Hauptachse (X), umfassend:
- eine zur Hauptachse (X) koaxiale äußere zylindrische rohrförmige Hülse (12);
- eine innere Hülse (18) mit einer rohrförmigen Wand, die durch eine zylindrische Innenfläche (20), die eine zentrale Öffnung (22) umgrenzt, und durch eine zylindrische Außenfläche (24) begrenzt wird, wobei die innere Hülse (18) konzentrisch innerhalb der äußeren Hülse (12) angeordnet ist;
- einen Ring (26) aus elastomerem Material, der radial zwischen der äußeren Hülse (12) und der inneren Hülse (18) eingefügt ist;
- wobei die innere Hülse (18) durch zumindest einen Hohlraum (28A, 28B) durchbrochen ist, der die Dicke ihrer Wand axial durchdringt, wobei sich der Hohlraum (28A, 28B) in Umfangsrichtung über einen bestimmten Winkelsektor (αA, αB) kreisbogenförmig um die Hauptachse (X) erstreckt, wobei der Hohlraum (28A, 28B) radial durch eine innere Trennwand (30A, 30B) und durch eine äußere Trennwand (32A, 32B) begrenzt ist,
- wobei die innere Trennwand (30A, 30B) radial durch eine Außenfläche (34A, 34B) einerseits und durch die Innenfläche (20) der Wand der inneren Hülse (18) andererseits begrenzt ist, wobei die Außenfläche (34A, 34B) der inneren Trennwand (30A, 30B) eine Breite aufweist, die größer als oder so groß wie der Durchmesser der zentralen Öffnung (22) ist;
**dadurch gekennzeichnet, dass** die innere Trennwand (30A, 30B) eine axiale Bruchzone (42A, 42B) mit vorbestimmter Lokalisierung aufweist, die eine axiale Öffnung (44) oder eine Bruchfestigkeit, die wesentlich geringer als die der übrigen inneren Trennwand (30A, 30B) ist, aufweist.

2. Elastisches Gelenk (10) nach dem vorangehenden Anspruch, **dadurch gekennzeichnet, dass** die Bruchzone (42A, 42B) durch einen axialen Schlitz (44) ausgebildet ist, der die innere Trennwand (30A, 30B) durchquert und sich über die gesamte axiale Länge der inneren Trennwand (30A, 30B) erstreckt.

3. Gelenk (10) nach Anspruch 1, **dadurch gekennzeichnet, dass** die Bruchzone (42A, 42B) zumindest eine oberflächliche Rille (46) aufweist, die in der Innenfläche (20) und/oder in der Außenfläche (34A, 34B) der inneren Trennwand (30A, 30B) ausgebildet ist, um eine Sollbruchstelle auszubilden.

4. Gelenk (10) nach einem der vorangehenden Ansprüche, **dadurch gekennzeichnet, dass** die Bruchzone (42A, 42B) im Wesentlichen auf der Halbierungslinie (36A, 36B) des Winkelsektors (αA, αB), über den sich der Hohlraum (28A, 28B) erstreckt angeordnet ist.

5. Gelenk (10) nach einem der Ansprüche 2 bis 4, **dadurch gekennzeichnet, dass** der Schlitz (44) bzw. die Nut (46) über die gesamte axiale Länge der inneren Trennwand (30A, 30B) durchgehend ist.

6. Gelenk (10) nach einem der Ansprüche 2 bis 4, **dadurch gekennzeichnet, dass** sich der Schlitz (44) bzw. die Nut (46) diskontinuierlich entlang der inneren Trennwand (30A, 30B) erstreckt.

7. Elastisches Gelenk (10) nach einem der vorangehenden Ansprüche, **dadurch gekennzeichnet, dass** die innere Hülse (18) eine axiale Symmetrie entlang der Hauptachse (X) des Gelenks aufweist (10).

8. Fahrzeugaufhängungsvorrichtung (48) mit zumindest einem Aufhängungsarm (58) mit einer im Wesentlichen quer verlaufenden Achse (Y) und zumindest einem Traggabelkopf (64), wobei zumindest ein Ende (60, 62) des Arms (58) über ein elastisches Gelenk (10), das nach einem der vorangehenden Ansprüche ausgeführt ist, um eine Längsachse (X) gelenkig am Traggabelkopf (64) montiert ist, wobei das Gelenk (10) am Gabelkopf (64) mittels einer Schraube befestigt ist, deren Querschaft (40) in der zentralen Öffnung (22) der inneren Hülse (18) unter Längseinspannung der inneren Hülse (18) zwischen zwei Wangen (66) des Gabelkopfs (64) aufgenommen ist, **dadurch gekennzeichnet, dass** die Halbierungslinie (36A, 36B) der Winkelsektoren (αA, αB) jedes Hohlraums (28A, 28B) im Wesentlichen in der Achse (Y) des Arms ausgerichtet ist.

9. Vorrichtung (48) nach dem vorangehenden Anspruch, **dadurch gekennzeichnet, dass** eines der Enden (60, 62) des Arms (58) über den Gabelkopf (64) mit einem Achsschenkel (54) oder einem Gestell (50) des Fahrzeugs verbunden ist.

## Claims

1. Elastic joint (10), in particular for a motor vehicle, with a main axis (X) of axial orientation, comprising:
- a cylindrical tubular external bushing (12) coaxial to the main axis (X);
- an internal bushing (18) having a tubular wall delimited by a cylindrical internal face (20) circumscribing a central orifice (22) and by a cylindrical external face (24), the internal bushing (18) being arranged concentrically within the external bushing (12);
- a ring (26) of elastomer material which is inserted radially between the external bushing (12) and the internal bushing (18);
- the internal bushing (18) being perforated with at least one cavity (28A, 28B) passing axially through the thickness of its wall, the cavity (28A, 28B) extending circumferentially in a circular arc over an angular sector (αA, αB) defined around the main axis (X), the cavity (28A, 28B) being delimited radially by an internal partition (30A, 30B) and by an external partition (32A, 32B);
- the internal partition (30A, 30B) being delimited radially by an external face (34A, 34B), on the one hand, and by the internal face (20) of the wall of the internal bushing (18), on the other hand, the external face (34A, 34B) of the internal partition (30A, 30B) having a width which is greater than or equal to the diameter of the central orifice (22);
**characterized in that** the internal partition (30A, 30B) comprises an axial rupture area (42A, 42B) of predetermined location having an axial opening (44) or a rupture resistance substantially below that of the rest of said internal partition (30A, 30B) .

2. Elastic joint (10) according to the preceding claim, **characterized in that** the rupture area (42A, 42B) is formed by an axial slot (44) passing through the internal partition (30A, 30B) and extending over the entire axial length of the internal partition (30A, 30B).

3. Joint (10) according to Claim 1, **characterized in that** the rupture area (42A, 42B) comprises at least one superficial groove (46) formed in the internal face (20) and/or in the external face (34A, 34B) of the internal partition (30A, 30B) so as to form a rupture initiator.

4. Joint (10) according to any one of the preceding claims, **characterized in that** the rupture area (42A, 42B) is arranged substantially at the bisector (36A, 36B) of said angular sector (αA, αB) over which the cavity (28A, 28B) extends.

5. Joint (10) according to any one of Claims 2 to 4, **characterized in that** the slot (44) or the groove (46) is continuous over the entire axial length of the internal partition (30A, 30B).

6. Joint (10) according to any one of Claims 2 to 4, **characterized in that** the slot (44) or the groove (46) extends discontinuously along the internal partition (30A, 30B).

7. Elastic joint (10) according to any one of the preceding claims, **characterized in that** the internal bushing (18) has an axial symmetry along the main axis (X) of the joint (10).

8. Vehicle suspension device (48) comprising at least one suspension arm (58) with a substantially transverse axis (Y) and at least one support yoke (64), at least one end (60, 62) of the arm (58) being mounted in an articulated manner about a longitudinal axis (X) on the support yoke (64) by way of an elastic joint (10) embodied according to any one of the preceding claims, the joint (10) being fastened to the yoke (64) by means of a screw having a transverse rod (40) received in the central orifice (22) of the internal bushing (18) with longitudinal clamping of the internal bushing (18) between two flanks (66) of the yoke (64), **characterized in that** the bisector (36A, 36B) of the angular sectors (αA, αB) of each cavity (28A, 28B) is oriented substantially in the axis (Y) of the arm.

9. Device (48) according to the preceding claim, **characterized in that** one of the ends (60, 62) of the arm (58) is connected to a steering knuckle (54) or a cradle (50) of the vehicle by way of said yoke (64).
